# EUROPEAN PATENT APPLICATION

(11) **EP 1 035 470 A2**
(43) Date of publication of application: **13.09.2000**
(21) Application number: 00104813.1
(22) Date of filing: 06.03.2000
(51) Int. Cl.: G06F 5/06

(54) **Command transfer control method, apparatus, and system**

(30) Priority: 09.03.1999 JP 6243799
(71) Applicant: MATSUSHITA ELECTRIC INDUSTRIAL CO., LTD., Kadoma-shi, Osaka-fu 571 (JP)
(72) Inventor: Tokuyama, Takuro, Tokyo (JP); Miyabe, Hiroshi, Tokyo (JP)
(74) Representative: Grünecker, Kinkeldey, Stockmair & Schwanhäusser Anwaltssozietät

(57) **Abstract**

Buffer means for storing and retaining command data is placed between a command transmission unit for sending command data and a command reception unit for receiving the sent command data and performing processing operation based on the command data, a plurality of command data pieces for controlling processing of the command data are sent in batch from the command transmission unit to the command reception unit, and the command data pieces are temporarily stored and retained in the buffer means so that the command data pieces can be retrieved in order. It is possible to cope with rapid change in the operation and control, and the whole performance of a data transmission and reception system can be maintained.

## Description

### BACKGROUND OF THE INVENTION

This invention relates to a command transfer control method, a command transfer control apparatus, and a command transfer control system and in particular to a command transfer control method, a command transfer control apparatus, and a command transfer control system useful for data transmission wherein a command is sent frequently or a plurality of commands are sent at the same time.

In recent years, the following practice has been widely conducted: Data of a moving image, a still image, voice, etc., is transmitted by a method of communication, broadcasting, etc., and the transmitted data is edited and is stored in and reproduced by a data recording and reproducing apparatus such as an image recording and reproducing apparatus. In such an image recording and reproducing apparatus, to transmit image or voice data and record or reproduce the data, command data for changing the operation in various ways, such as control data, may be sent from a command transmission unit to a command reception unit at the same time. For example, to perform control so as to reproduce one part of received or edited image or voice data at double speed and another part at 5X speed at the same time as sending the received or edited image or voice data to the image recording and reproducing apparatus, command data is sent from the command transmission unit to the command reception unit one after another.

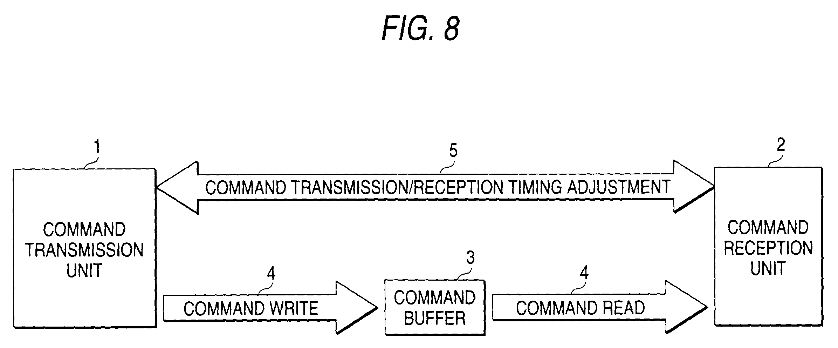

In such a case, in a related art, a data transmission/reception system, for example, as shown in FIG. 8 is used to transmit and receive command data. In FIG. 8, numeral 1 denotes a command transmission unit for transmitting command data, numeral 2 denotes a command reception unit for receiving command data, numeral 3 denotes a command buffer placed between the command transmission unit 1 and the command reception unit 2, numeral 4 denotes a command bus used as a command data transmission line among the command transmission unit 1, the command reception unit 2, and the command buffer 3, and numeral 5 denotes a control signal bus for controlling transmission of command data. It is a general rule that such a data transmission/reception system transmits and receives the command data in a handshaking sequence. In the handshaking sequence, first the command transmission unit 1 inquires of the command reception unit 2 whether or not command data can be received. At this time, if command data cannot be received, the command transmission unit 1 waits; if command data can be received, the command transmission unit 1 writes command data into the command buffer 3. After the termination of writing the command data, the command transmission unit 1 notifies the command reception unit 2 that the command data has been transmitted. On the other hand, the command reception unit 2, which is informed of the fact, reads the command data from the command buffer 3. While the command reception unit 2 is reading the command data, the command reception unit 2 responds "unable" to an inquiry concerning whether or not command data.

However, in the related art, synchronization (wait) occurs between the command transmission unit 1 and the command reception unit 2. Thus, the whole performance of the data transmission/reception system is degraded (for example, the whole processing throughput is reduced). The command transmission unit 1 involves processing of inquiring of the command reception unit 2 before transmitting command data, resulting in a load on the data transmission/reception operation. Further, to transmit more than one command data piece at the same time, the wait time is prolonged, in which case a problem of degradation of the whole performance of the system also occurs.

### SUMMARY OF THE INVENTION

It is therefore an object of the invention to provide a command transfer control method, a command transfer control apparatus, and a command transfer control system useful for data transmission wherein if a command is sent frequently or a plurality of commands are sent at the same time, the whole performance of a data transmission and reception system is maintained.

To the end, according to the invention, there is provided a command transfer control method comprising the steps of providing buffer means for storing and retaining command data, placed between a command transmission unit for sending command data and a command reception unit for receiving the sent command data, sending a plurality of command data pieces in batch from the command transmission unit to the command reception unit, and temporarily storing and retaining the command data pieces in the buffer means so that the command data pieces can be retrieved in order.

In the invention, the buffer means stores the sent command data pieces in predetermined command storage areas and indicates the command storage areas in which the command data pieces are stored.

According to the configuration, if a command is sent frequently or a plurality of commands are sent at the same time in the data transmission operation such as recording and reproducing an image, it is not necessary to inquire whether or not each command data piece can be received in command data transmission, and it is made possible to maintain the whole performance of the data transmission and reception system.

According to the invention, there is provided a command transfer control apparatus comprising a command transmission unit for sending command data, a command reception unit for receiving the sent command data, and buffer control means being placed between the command transmission unit and the command reception unit, characterized in that buffer means comprises a command buffer having a plurality of command storage areas for storing command data and a storage area indication buffer for storing data indicting the command storage area in which the command data is stored, and that the buffer control means stores a plurality of command data pieces in the command storage areas of the command buffer and writes the data indicting the command storage area in which the command data is stored into the storage area indication buffer.

According to the invention, there is provided a command transfer control system comprising a command transmission unit for sending command data, a command reception unit for receiving the sent command data, buffer means being placed between the command transmission unit and the command reception unit, and buffer control means for controlling the operation of the buffer means, characterized in that the command transmission unit sends a plurality of command data pieces in batch, the buffer means temporarily stores and retains the sent command data pieces, and while reading the command data stored in the buffer means, the command reception unit performs processing operation based on the command data.

According to the configuration, data transmission processing can be performed without applying command transmission and reception loads to the whole system, and it is made possible to enhance the whole system performance.

According to the invention, there is provided a command transfer control method comprising the steps of providing buffer means for storing and retaining command data, placed between a command transmission unit for sending command data and a command reception unit for receiving the sent command data and performing processing operation based on the command data, sending a plurality of command data pieces for controlling processing of the command data in batch from the command transmission unit to the command reception unit, and temporarily storing and retaining the command data pieces in the buffer means so that the command data pieces can be retrieved in order. If a command is sent frequently or a plurality of commands are sent at the same time in the data transmission operation such as recording and reproducing an image, it is not necessary to inquire whether or not each command data piece can be received in command data transmission, and the whole performance of the data transmission and reception system can be maintained.

Preferably, in the command transfer control, the buffer means may store the sent command data pieces in predetermined command storage areas and indicates the command storage areas in which the command data pieces are stored. The command data in the command data storage area can be stored, retrieved, and read easily and rapidly.

Further, according to the invention, there is provided a command transfer control apparatus comprising a command transmission unit for sending command data, a command reception unit for receiving the sent command data and performing processing operation based on the command data, buffer means being placed between the command transmission unit and the command reception unit for storing and retaining the command data, and buffer control means for controlling command data write operation into the buffer means and command data read operation from the buffer means, in that the buffer means comprises a command buffer having a plurality of command storage areas for storing command data and a storage area indication buffer for storing data indicting the command storage area in which the command data is stored, and that the buffer control means stores a plurality of command data pieces sent from the command transmission unit in the command storage areas of the command buffer and writes the data indicting the command storage area in which the command data is stored into the storage area indication buffer. Commands are sent in batch and are read in order, whereby the command transfer control apparatus can cope with rapid change in the operation and control, and the whole performance of the data transmission and reception system can be maintained.

Preferably, in the command transfer control apparatus as mentioned, the buffer control means may write the data indicting the command storage area in which the command data is stored into the storage area indication buffer in the order in which the command data was written. Commands can be read sequentially.

Preferably, the storage area indication buffer of the buffer means is provided with a write pointer and a read pointer moving following the write pointer and the buffer control means instructs the storage area indication buffer to make the read pointer point to only the address into which command data is written based on the write pointer. Whenever a command is written, it is read, and the processing operation is performed exactly as commanded.

Furthermore, according to the invention, there is provided a command transfer control system comprising a command transmission unit for sending command data, a command reception unit for receiving the sent command data and recording and reproducing contents based on the command data, buffer means being placed between the command transmission unit and the command reception unit for storing and retaining the command data, and buffer control means for controlling command data write operation into the buffer means and command data read operation from the buffer means, in that the command transmission unit sends a plurality of command data pieces for controlling processing of the command data in batch, the buffer means temporarily stores and retains the sent command data pieces, and while reading the command data stored in the buffer means, the command reception unit performs processing operation based on the command data. Commands are sent in batch, whereby the transmission and reception acknowledge processing operation for each command can be skipped, the data transfer operation is simplified, and the whole processing speed is increased.

Preferably, the buffer means comprises a command buffer having a plurality of command storage areas for storing command data and a storage area indication buffer for storing data indicting the command storage area in which the command data is stored, the buffer control means stores a plurality of command data pieces sent from the command transmission unit in the command storage areas of the command buffer and writes the data indicting the command storage area in which the command data is stored into the storage area indication buffer, and while reading the command data stored in the command buffer based on the indication data in the storage area indication buffer, the command reception unit performs processing operation based on the command data.

Preferably, the storage area indication buffer of the buffer means is provided with a write pointer and a read pointer moving following the write pointer and wherein at the command data read time, the buffer control means instructs the storage area indication buffer to make the read pointer point to only the address into which command data is written based on the write pointer and move the read pointer to the address matching the write pointer.

In the invention as claimed in claim 9, in the command transfer control system as claimed in any of claims 6 to 8, when the command data is read from one command storage area of the command buffer, the buffer control means writes available area information into the command storage area. After one command data storage area is read, another command data piece can be written into the command data storage area.

### BRIEF DESCRIPTION OF THE DRAWINGS

FIG. 1 is a block diagram to show the configuration of a command transfer control apparatus according to one embodiment of the invention;
FIG. 2 is a schematic drawing to show command buffers provided in buffer memory used with the command transfer control apparatus according to the embodiment of the invention;
FIG. 3 is a drawing to show an internal configuration example of one command buffer used with the command transfer control apparatus according to the embodiment of the invention;
FIG. 4 is a drawing to show a storage area indication buffer provided in the buffer memory used with the command transfer control apparatus according to the embodiment of the invention;
FIG. 5 is a drawing to schematically show that the storage area indication buffer used with the command transfer control apparatus according to the embodiment of the invention is of a ring buffer structure;
FIG. 6 is a flowchart to describe the command transmission operation in the command transfer control apparatus according to the embodiment of the invention;
FIG. 7 is a flowchart to describe the command reception operation in the command transfer control apparatus according to the embodiment of the invention; and
FIG. 8 is a block diagram to show the configuration of a command transfer control apparatus in a related art.

### DETAILED DESCRIPTION OF THE PREFERRED EMBODIMENTS

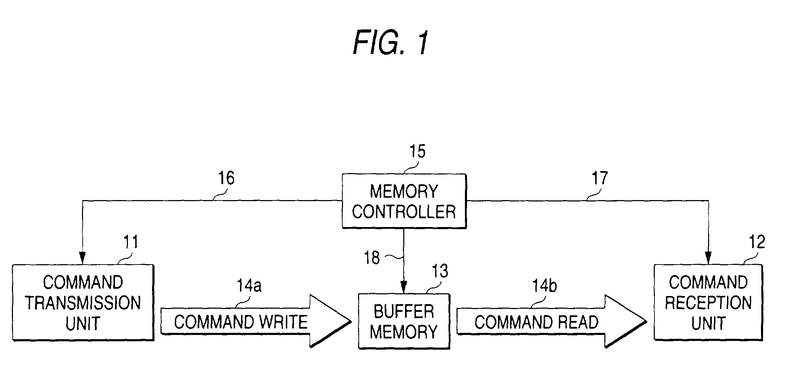

An embodiment of the invention will be discussed. FIG. 1 is a block diagram to show the configuration of a command transfer control apparatus according to one embodiment of the invention and a system constructed thereby. In FIG. 1, numeral 11 denotes a command transmission unit for transmitting command data, numeral 12 denotes a command reception unit for receiving command data, numeral 13 denotes buffer memory as buffer means placed between the command transmission unit 11 and the command reception unit 12, numeral 14a denotes a command bus used as a command data transmission line between the command transmission unit 11 and the buffer memory 13, numeral 14b denotes a command bus used as a command data transmission line between the buffer memory 13 and the command reception unit 12, numeral 15 denotes a memory controller as buffer control means for controlling the command data write operation into and the command data read operation from the buffer memory 13, numeral 16 denotes a control signal line for transferring a control signal from the memory controller 15 to the command transmission unit 11 for controlling command data transmission, numeral 17 denotes a control signal line for transferring a control signal from the memory controller 15 to the command reception unit 12 for controlling command data transmission, and numeral 18 denotes a control signal line for transferring a control signal from the memory controller 15 to the buffer memory 13 for controlling command data transmission.

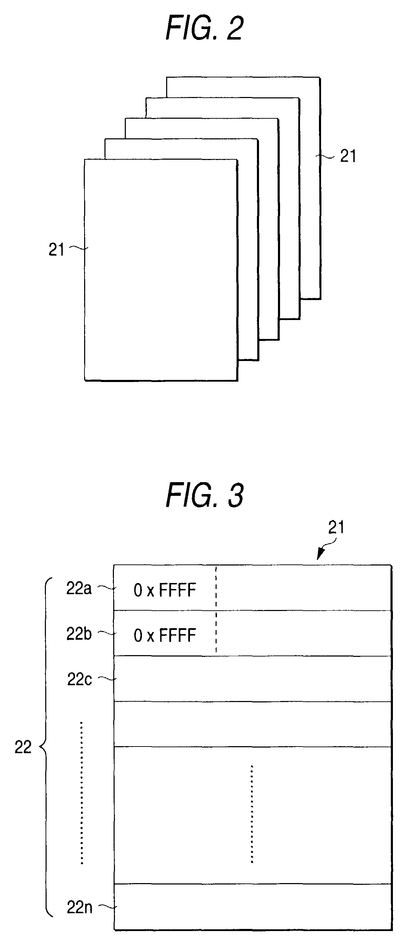

FIGS. 2 to 5 are drawings to conceptually describe the internal configuration of the buffer memory 13 shown in FIG. 1. The buffer memory 13 has command buffers 21 each having a plurality of command storage areas for storing command data, and a storage area indication buffer for storing data indicating the command storage areas in which command data is stored. FIG. 2 is a drawing to show the command buffers 21 provided in the buffer memory 13 and FIG. 3 is a drawing to show the internal configuration of one command buffer 21. The buffer memory 13 contains a plurality of command buffers 21. As shown in FIG. 3, one command buffer 21 has a plurality of command storage areas (slots) 22 (22a, 22b, 22c, ...22n) for storing command data, and one command data piece is stored in one command storage area 22. An identification number of ID, etc., is assigned to each command storage area 22.

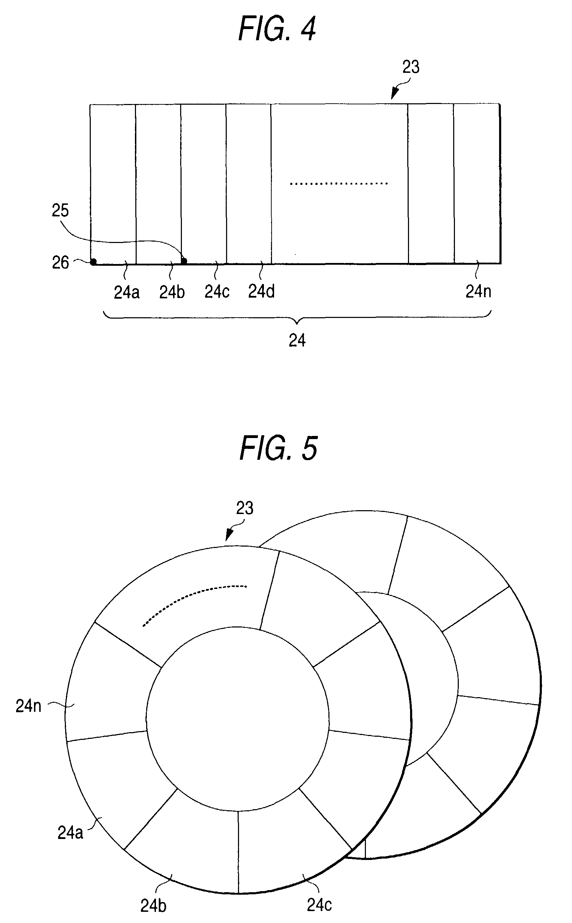

FIG. 4 is a drawing to show the storage area indication buffer 23 provided in the buffer memory 13. Like the command buffer 21, the storage area indication buffer 23 also has a plurality of data storage areas 24 (24a, 24b, 24c, ...24n) for indicating the command storage areas 22, and one storage area indication data piece is stored in one data storage area 24. The identification number such as the channel number, slot number, or ID assigned to the command storage area 22 is stored in the data storage area 24 as the storage area indication data. The storage area indication buffer 23 is of a so-called ring buffer structure wherein, for example, assuming that data storage is started at the data storage area 24a and then data is written into the data storage areas 24b, 24c, ... in order, when data is written into the data storage area 24n and further data is written, again a return is made to the data storage area 24a and data is written thereinto. FIG. 5 is a drawing to schematically show the ring buffer structure of the storage area indication buffer 23. The storage area indication buffer 23 is provided with a write pointer 25 for writing data into each data storage area 24 and a read pointer 26 for reading data from each data storage area 24. The write pointer 25 and the read pointer 26 perform the go-around operation in such a manner that the write pointer 25 moves among the data storage areas 24 on the storage area indication buffer 23 of the ring buffer structure prior to the read pointer 26 and that the read pointer 26 follows the move of the write pointer 25.

The command transfer control operation (communication operation) of the described command transfer control apparatus is as follows: First, before the command transfer operation, the initialization operation of the buffer memory 13 is performed. In the initialization operation, data of 0xFFFF is written into the top word of every command storage area 22 of each command buffer 21 in the buffer memory 13. The data 0xFFFF is data indicating that no command data is written into the command storage area 22 (namely, available command storage area). On the other hand, in the storage area indication buffer 23, data 0 is written into the data storage area 24 pointed to by the write pointer 25 and data 0 is written into the data storage area 24 pointed to by the read pointer 26. After the operation is performed, the data transfer control operation is started. In the operation description to follow, it is assumed that the command transfer control operation is started in the state in which data is written into neither the command buffer 21 nor the storage area indication buffer 23 by the initialization operation. Therefore, in the storage area indication buffer 23, both the write pointer 25 and the read pointer 26 point to the data storage area 24a.

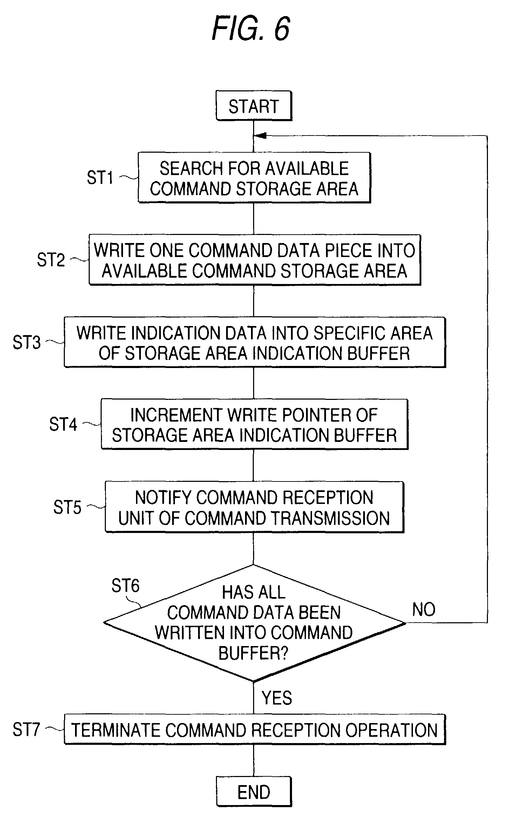

FIG. 6 is a flowchart to describe the command transfer control operation of the command transfer control apparatus according to the embodiment. When command transfer is started, a plurality of command data pieces are sent in batch from the command transmission unit 11 and arrive at the buffer memory 13. Then, the memory controller 15 searches the command buffer 21 of the buffer memory 13 for an available command storage area 22 at process step (simply, step) ST1. The memory controller 15 writes one command data piece into the found available command storage area 22a at step ST2. Next, at step ST 3, the memory controller 15 writes the identification number such as the channel number, slot number, or ID of the command storage area 22a written at step ST2 (storage area indication data) into the data storage area 24a pointed to by the write pointer 25 of the storage area indication buffer 23. Then, at step ST4, the memory controller 15 increments the write pointer 25 of the storage area indication buffer 23. The read pointer 26 remains indicating the data storage area 24a.

Next, at step ST5, the memory controller 15 notifies the command reception unit 12 that a command is transmitted, and further at step ST6, the memory controller 15 checks to see if all command data has been written into the command buffer 21. In the command transfer in the example, a plurality of command data pieces are sent in batch from the command transmission unit 11. Thus, when not all command data is written into the command buffer 21, the memory controller 15 returns to step ST1 and searches the command buffer 21 of the buffer memory 13 for another available command storage area 22 and further repeats the process to step ST6 as many times as the remaining number of command data pieces. Thus, command data is written into the command storage area 22b following the command storage area 22a, and the corresponding storage area indication data is written into the data storage area 24b of the storage area indication buffer 23. Likewise, command data is written into the command storage areas 22c, 22d, ...22n in order; meanwhile, in the storage area indication buffer 23, the corresponding storage area indication data is written into the data storage areas 24c, 24d, ...24n in order as the write pointer 25 is incremented. After the operation, the read pointer 26 still remains indicating the data storage area 24a.

On the other hand, if the memory controller 15 determines at step ST6 that all command data is written into the command buffer 21, it goes to step ST7 and enters a process of terminating the reception processing operation of the command data sent in batch from the command transmission unit 11, then terminates the command transfer control operation sequence.

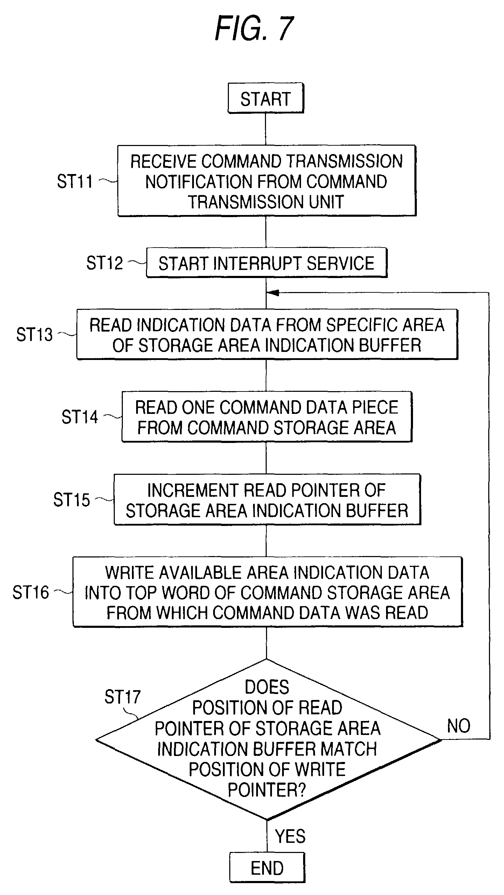

At the next stage, the command reception unit 12 executes the command read operation. FIG. 7 is a flowchart to describe the command transfer control operation in the command read operation in the embodiment. When the command read operation is started, at step ST11, the command transmission unit 11 interrupts the command reception unit 12 as a command transmission notification. At step ST12, the command reception unit 12 and the memory controller 15 start interrupt service. At step ST13, the memory controller 15 reads the storage area indication data from the data storage area pointed to by the read pointer 26 of the storage area indication buffer 23 (first, data storage area 24a), and knows that the area of the command buffer 21 indicated by the storage area indication data is the command storage area 22a. Based on this information, the command reception unit 12 reads one command data piece from the command storage area 22a at step ST14. Next, at step ST15, the memory controller 15 increments the read pointer 26 of the storage area indication buffer 23. At step ST16, the command reception unit 12 writes data of 0xFFFF into the top word of the command storage area 22a from which the command data was previously read at step ST14, indicating that the command storage area 22a is an available command storage area.

When the process to step ST16 is executed, at step ST17, the memory controller 15 checks whether or not the position of the read pointer 26 of the storage area indication buffer 23 matches the position of the write pointer 25 (in the normal state, the read pointer 26 is behind or at the same position as the write pointer 25; see the description of the pointers given above). If they do not match, the memory controller 15 reads the storage area indication data from the data storage area pointed to by the read pointer 26 of the storage area indication buffer 23 (in this case, data storage area 24b), and knows the command storage area of the command buffer 21 indicated by the storage area indication data (in this case, command storage area 22b). Further, the process to step ST17 is repeated as many times as the number of command data pieces stored in the memory buffer 13. Thus, the command data in the command storage area 22b following the command storage area 22a is read, the read pointer 26 is incremented, and data of 0xFFFF is written into the top word of the command storage area 22b. Likewise, the command data is read from the command storage areas 22c, 22d, ...22n in order; meanwhile, in the storage area indication buffer 23, the corresponding storage area indication data is read from the data storage areas 24c, 24d, ...24n in order as the read pointer 26 is incremented. By the operation, the read pointer 26 is incremented so as to follow the write pointer 25. When it is determined at step ST17 that the position of the read pointer 26 matches that of the write pointer 25, no storage area indication data is written in the data storage area 24 corresponding to the pointer position and thus the interrupt operation sequence of the command data read is terminated.

In the description of the command data write operation into the memory buffer and the command data read operation from the memory buffer involved in the command transfer, the command data is stored in the command storage areas 22 of the command buffer 21 in the order of 22a, 22b, 22c, ... systematically; in fact, however, the command data is not necessarily stored in order systematically. While the command buffer 21 is searched for an available command storage area 22, the command data is written into the available area without order. Thus, the storage area indication data storage areas 24 provided in the storage area indication buffer 23 become important.

In the embodiment, the buffer memory 13 is placed between the command transmission unit 11 and the command reception unit 12, and is controlled by the memory controller 15. Aside from this, using a configuration similar to that in the related art as shown in FIG. 8, the command transmission unit 11 and the command reception unit 12 may control the buffer memory directly and moreover the control contents may be based on those as shown in FIGS. 6 and 7.

As described throughout the specification, according to the invention, buffer means for storing and retaining command data is placed between a command transmission unit for sending command data and a command reception unit for receiving the sent command data and performing processing operation based on the command data, a plurality of command data pieces for controlling processing of the command data are sent in batch from the command transmission unit to the command reception unit, and the command data pieces are temporarily stored and retained in the buffer means so that the command data pieces can be retrieved in order. If a command is sent frequently or a plurality of commands are sent at the same time, it is not necessary to inquire whether or not each command data piece can be received in command data transmission. Commands are sent in batch and are read in order, whereby it is possible to cope with rapid change in the operation and control, and the whole performance of the data transmission and reception system can be maintained.

## Claims

1. A command transfer control method comprising the steps of:
providing buffer means for storing and retaining command data, placed between a command transmission unit for sending command data and a command reception unit for receiving the sent command data and performing processing operation based on the command data;
sending a plurality of command data pieces for controlling processing of the command data in batch from the command transmission unit to the command reception unit; and
temporarily storing and retaining the command data pieces in the buffer means so that the command data pieces is retrieved in order.

2. The command transfer control method as claimed in claim 1, wherein the buffer means stores the sent command data pieces in predetermined command storage areas and indicates the command storage areas in which the command data pieces are stored.

3. A command transfer control apparatus comprising:
a command transmission unit for sending command data;
a command reception unit for receiving the sent command data and performing processing operation based on the command data;
buffer means placed between said command transmission unit and said command reception unit for storing and retaining the command data; and
buffer control means for controlling command data write operation into said buffer means and command data read operation from said buffer means, said buffer means including a command buffer having a plurality of command storage areas for storing command data and a storage area indication buffer for storing data indicting the command storage area in which the command data is stored,
wherein said buffer control means stores a plurality of command data pieces sent from said command transmission unit in the command storage areas of the command buffer and writes the data indicting the command storage area in which the command data is stored into the storage area indication buffer.

4. The command transfer control apparatus as claimed in claim 3, wherein said buffer control means writes the data indicting the command storage area in which the command data is stored into the storage area indication buffer in the order in which the command data was written.

5. The command transfer control apparatus as claimed in claim 3, wherein the storage area indication buffer of said buffer means is provided with a write pointer and a read pointer moving following the write pointer and wherein said buffer control means instructs the storage area indication buffer to make the read pointer point to only the address into which command data is written based on the write pointer.

6. The command transfer control apparatus as claimed in claim 4, wherein the storage area indication buffer of said buffer means is provided with a write pointer and a read pointer moving following the write pointer and wherein said buffer control means instructs the storage area indication buffer to make the read pointer point to only the address into which command data is written based on the write pointer.

7. A command transfer control system comprising:
a command transmission unit for sending command data;
a command reception unit for receiving the sent command data and recording and reproducing contents based on the command data;
buffer means being placed between said command transmission unit and said command reception unit for storing and retaining the command data; and
buffer control means for controlling command data write operation into said buffer means and command data read operation from said buffer means,
wherein said command transmission unit sends a plurality of command data pieces for controlling processing of the command data in batch, said buffer means temporarily stores and retains the sent command data pieces, and while reading the command data stored in said buffer means, said command reception unit performs processing operation based on the command data.

8. The command transfer control system as claimed in claim 7, wherein said buffer means comprises a command buffer having a plurality of command storage areas for storing command data and a storage area indication buffer for storing data indicting the command storage area in which the command data is stored,
said buffer control means stores a plurality of command data pieces sent from said command transmission unit in the command storage areas of the command buffer and writes the data indicting the command storage area in which the command data is stored into the storage area indication buffer, and
while reading the command data stored in the command buffer based on the indication data in the storage area indication buffer, said command reception unit performs processing operation based on the command data.

9. The command transfer control system as claimed in claim 7, wherein the storage area indication buffer of said buffer means is provided with a write pointer and a read pointer moving following the write pointer and wherein at the command data read time, said buffer control means instructs the storage area indication buffer to make the read pointer point to only the address into which command data is written based on the write pointer and move the read pointer to the address matching the write pointer.

10. The command transfer control system as claimed in claim 8, wherein the storage area indication buffer of said buffer means is provided with a write pointer and a read pointer moving following the write pointer and wherein at the command data read time, said buffer control means instructs the storage area indication buffer to make the read pointer point to only the address into which command data is written based on the write pointer and move the read pointer to the address matching the write pointer.

11. The command transfer control system as claimed in any of claim 7, wherein when the command data is read from one command storage area of the command buffer, said buffer control means writes available area information into the command storage area.

12. The command transfer control system as claimed in any of claims 8, wherein when the command data is read from one command storage area of the command buffer, said buffer control means writes available area information into the command storage area.
